# NEW EUROPEAN PATENT SPECIFICATION

(11) **EP 2 958 773 B2**
(45) Date of publication and mention of the opposition decision: **24.02.2021**
(45) Mention of the grant of the patent: 27.09.2017
(21) Application number: 13705190.0
(22) Date of filing: 21.02.2013
(51) Int. Cl.: B60R 5/04

(54) **TONNEAU COVER DEVICE AND SYSTEM FOR A VEHICLE**
LADERAUMABDECKUNG UND SYSTEM FÜR EIN FAHRZEUG
DISPOSITIF DE COUVRE-HABITACLE ET SYSTÈME DESTINÉ À UN VÉHICULE

(43) Date of publication of application: 30.12.2015
(73) Proprietor: Toyota Jidosha Kabushiki Kaisha, Toyota-shi, Aichi-ken, 471-8571 (JP)
(72) Inventor: VANDERVELDEN, Karel, B-2800 Mechelen (BE)
(74) Representative: Cabinet Beau de Loménie
(86) International application number: PCT/EP2013/053423
(87) International publication number: WO 2014/127820

(56) References cited:
- DE-A1-102008 061 106
- DE-A1-102010 025 213
- DE-C1- 19 637 072
- FR-A1- 2 939 086
- US-A- 5 224 748
- US-A- 5 727 836
- US-A1- 2008 179 022

## Description

### TECHNICAL FIELD

The invention relates to vehicle with tonneau cover device, and a tonneau cover device.

### BACKGROUND

Thoughtful tonneau cover device design considers device function, cost, ease-of-use, removability, and stability during vehicle. Automotive designers will balance these considerations as they develop features for market-winning automobiles.

Tonneau cover devices function to enclose items stored in the rear compartment of a vehicle when needed. Such cover devices have a cover therein configured to move between an extended position, wherein the stored items are covered, and a retracted position, wherein the cover is contained in the device itself. Various mechanisms allow the cover to move between these two positions. These devices, regardless of the final design, should comply with various industry standards, government regulations, cost constraints and consumer preferences.

Ease of use is an aspect of cover device design that ensures a user can efficiently operate the device without too much effort or difficulty. When the user wants to cover stored items, the cover should be easy to pull and secure in the extended position. When the user needs access to the stored items covered, the cover should be easy to release for quick retraction.

Removability may also be an important design feature. Removability will be important for users who want to install the cover device in the vehicle only when needed to enclose items in the compartment. For example, the user may want to remove the device to create more storage space in the rear compartment. Various mechanisms are available to make tonneau cover devices removable.

Stability ensures that the cover device operates as it is intended to operate. Specifically, when the user wants the cover in the extended position, the cover should remain in the extended position. When the cover retracts, it should remain retracted. In some cases, however the cover dislodges from the extended position when the vehicle is moving over a rough road surface, for example. At best, the user is annoyed by this incident, at worst; the unintended cover retraction can cause driver distraction.US2008/0179022 A1 discloses a vehicle tonneau cover device according to the preamble of clim 1.

### SUMMARY

There is need for an improved tonneau cover device that addresses the aforementioned design considerations. The following exemplary embodiments address this need and the aforementioned design considerations.

An exemplary embodiment of the invention is a vehicle according to claim 1.

The invention includes a tonneau cover device wherein the pin has a base portion and a projection, and the projection extends from the base portion to engage the nesting device.

Further, the projection may be offset from a center of the base portion to position the pin axis (X) the offset distance (D) from the cover plane (P).

In an exemplary embodiment of the invention, the pin axis (X) has an offset distance (D) that is at least 2 mm from the cover plane (P). In another exemplary embodiment of the invention, the pin axis (X) has an offset distance (D) that is at least 2 mm below the cover plane (P). In another exemplary embodiment of the invention, for example, where desirable to tilt the endboard upward to initiate retraction, the pin axis (X) has an offset distance D that is at least 2 mm above the cover plane (P).

According to some embodiments of the present disclosure the pin axis (X) has an offset distance (D) that is at least 2 mm from an endboard edge of the pin, also referred to as a "horizontal offset." As used herein, the endboard edge of the pin is that edge which is closest to the interface between the pin and the endboard.

A horizontal offset may be used alone or in conjunction with an offset from the cover plane (P), and may be combined with any embodiment described herein, unless otherwise stated or in cases of clear incompatibility.

The endboard is configured to pivot about the pin axis (X) to release each pin from their respective nesting devices to move the cover into the retracted position.

In an exemplary embodiment of the disclosure, the retraction device comprises may include a housing with the retraction device (e.g., the cassette) therein. The retraction device configured to apply the retraction force (F) for moving the cover at least partially into the housing when each pin is released from their respective nesting devices.

Another exemplary embodiment of the disclosure is a tonneau cover device for use in a vehicle according to claim 8.

The tonneau cover device has a pin with a base portion and a projection and the projection extends from the base portion to engage the nesting device.

In an exemplary embodiment of the disclosure, the projection is offset from a center of the base portion to position the pin axis (X) the offset distance (D) from the cover plane (P).

In an exemplary embodiment of the disclosure, the pin axis (X) has an offset distance (D) that is at least 2 mm from the cover plane (P). In another exemplary embodiment, the pin axis (X) has an offset distance (D) that is at least 2 mm below the cover plane (P). In another exemplary device embodiment, e.g., where desirable to tilt the endboard upward to initiate retraction, the pin axis (X) has an offset distance D that is at least 2 mm above the cover plane (P). The endboard is configured to pivot about the pin axis (X) to release each pin from their respective nesting devices to move the cover into the retracted position.

In an exemplary embodiment of the disclosure, the retraction device (e.g., the cassette) comprises a housing. The retraction device configured to apply the retraction force (F) for moving the cover at least partially into the housing when each pin is released from their respective nesting devices.

The above summary of some particular exemplary aspects is not intended to describe each disclosed vehicle, device and system embodiment or every implementation of the disclosure. In particular, selected features of any illustrative embodiment within this specification may be incorporated into additional embodiments unless clearly stated to the contrary.

### BRIEF DESCRIPTION OF THE DRAWINGS

The disclosure may be more completely understood in consideration of the following detailed description of various embodiments in connection with the accompanying drawings.
FIG. 1 is a rear perspective view of a vehicle according to an embodiment of the disclosure;
FIG. 2 illustrates a tonneau cover device positioned in the rear compartment of the vehicle shown in FIG. 1;
FIG. 3 illustrates a tonneau cover device with the cover in an extended position enclosing a portion of the rear compartment of the vehicle shown in FIG. 1;
FIG. 4 is a perspective view of a schematic of a tonneau cover device with a cover in the retracted position;
FIG. 5 is a perspective view of a schematic of a tonneau cover device with a cover in the extended position illustrating engagement with nesting devices shown in dashed lines;
FIGS. 6A, 6B, and 6C are end, plan, and side views, respectively, of an embodiment of a pin used to engage a nesting device according to an embodiment of the disclosure;
FIG. 6D is a schematic diagram demonstrating engagement/ disengagement of a pin according to embodiments of the present disclosure;
FIG. 7 is a detailed schematic view illustrating how the cover engages the nesting devices as shown in FIG. 5; and
FIGS. 8A and 8B illustrate how the pins dislodge for the nesting devices according to an embodiment of the disclosure.

While the disclosure is amenable to various modifications and alternative forms, specifics thereof have been shown by way of example in the drawings and will be described in detail. It should be understood, however, that the intention is not to limit aspects of the disclosure to the particular embodiments described. On the contrary, the intention is to cover all modifications, equivalents, and alternatives falling within the scope of the disclosure.

### DETAILED DESCRIPTION

The following detailed description should be read with reference to the drawings in which similar elements in different drawings are numbered the same. The detailed description and the drawings, which are not necessarily to scale, depict illustrative embodiments and are not intended to limit the scope of the disclosure. The illustrative embodiments depicted are intended only as exemplary. Selected features of any illustrative embodiment may be incorporated into an additional embodiment unless clearly stated to the contrary.

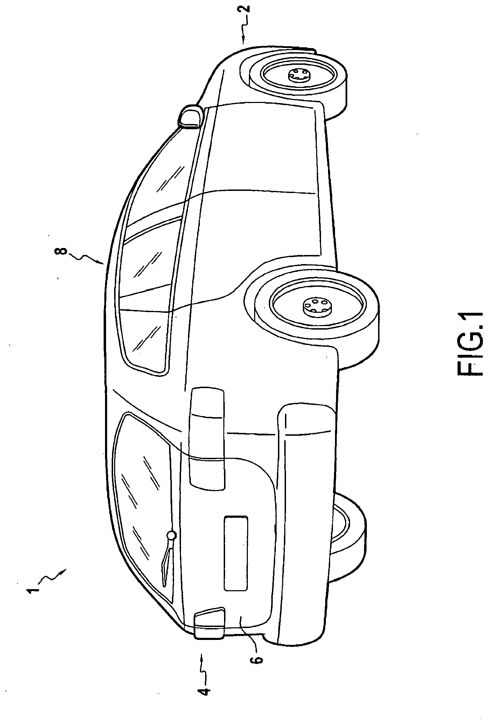

FIG. 1 is an example of a vehicle 1 having a tonneau cover device therein. The vehicle 1 shown is 5-door wagon-style automobile. Other types of automobiles, such as a sedan, wagon, hatchback, SUV, cross-over, or any other type of 5-door type automobile can be used as described herein. The vehicle 1 has front 2, back 4, passenger cabin 8, and a back door 6 that may be opened for access to a rear compartment 10 (not shown in FIG. 1). For clarification, the term "back door" 6 shall be understood to refer to a door permitting access to rear compartment 10 (e.g., luggage space), while a "rear door" permits access to a rear passenger compartment. e.g., a rear side door.

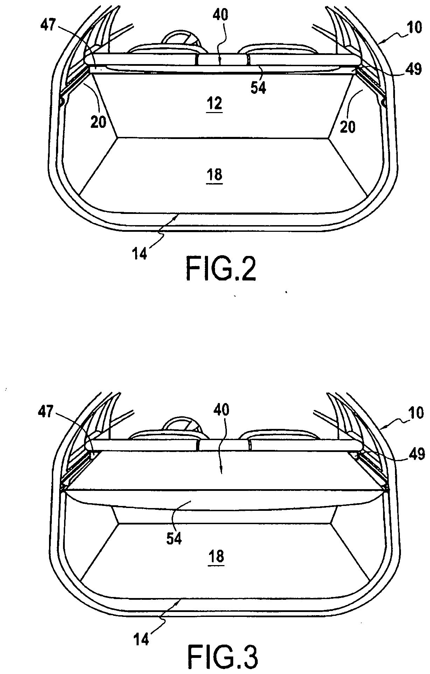

Turning to FIGS. 2 and 3, the rear compartment 10 has a forward end 12, rearward end 14, bottom 18 and opposing interior sides 20. The rearward end 14 of the rear compartment 10 corresponds to the back 4 of the vehicle. The forward end 12 is the portion of the rear compartment 10 proximate the rear passenger seats (not numbered). The phrase "forward end" or "forward direction" means the end, or direction toward, the front 2 of the vehicle. Conversely, the phrase "rearward end" or "rearward direction" means the end, or direction, toward the rear or back 4 of the vehicle.

Continuing with FIGS. 2 and 3, the tonneau cover device 40 is shown removably positioned in the rear compartment 10. The tonneau cover device 40 has first 47 and second 49 ends configured to engage (removably) opposing sides 20 of the rear compartment 10. The tonneau cover device 40 may be fixed to opposing sides 20 of the rear compartment 10. The tonneau cover device 40 is also shown elevated above the rear compartment floor 18 proximate to the shoulder rests of the rear passengers seats (not numbered in FIGS. 2 and 3). Alternate positions and configurations of the tonneau cover device 40 in the rear compartment 10 are possible.

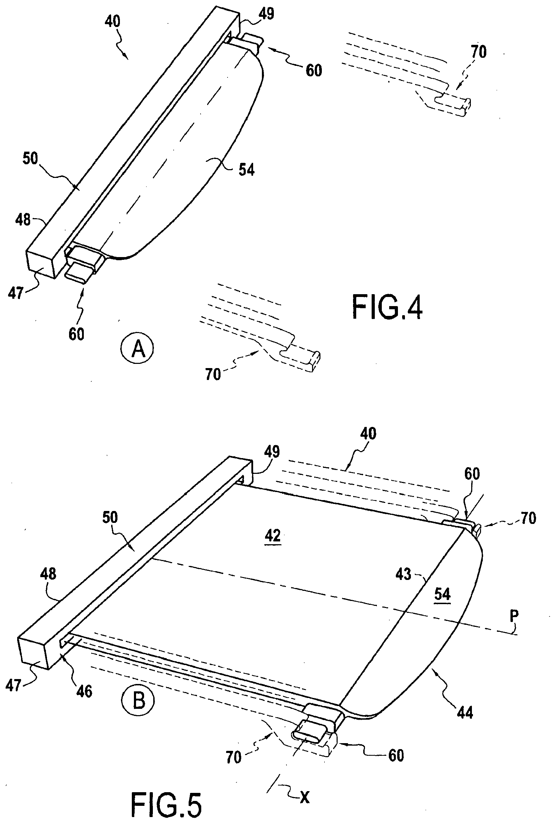

FIGS. 4 and 5 illustrate operation of the tonneau cover device 40. FIG. 4 shows the cover device in the retracted position A while FIG. 5 shows the device in an extended position B.

As shown in FIG. 5, the tonneau cover device 40 has a retraction device 50, a moveable cover 42 (FIG. 5), two pins 60 extend from opposing sides of the moveable cover 42 and an endboard 54 connected to the distal end 43 of the moveable cover 42. When the cover device is in the retracted position A, a user can pull the endboard 54 to the extended position whereby the pins 60 engage the nesting devices 70 (detailed below). To move the cover 42 into the retracted position A, the endboard 54 is deflected so as to release the pins 60 from the nesting devices 70, allowing the retraction means 54 to pulls the cover 42 back to the retracted position A.

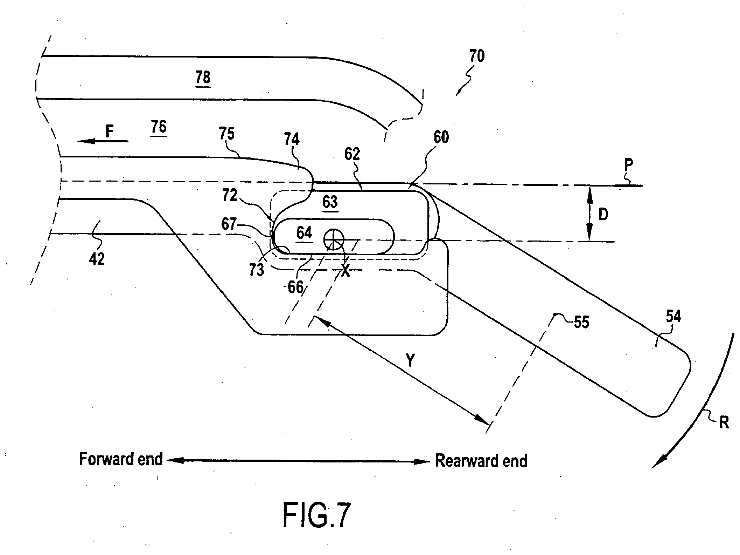

Continuing with FIGS. 4 and 5, the retraction device 50 has a housing 48 with a retraction means 46 therein (not shown). The retraction means 46 is connected to a first end (not shown) of the cover 42 and applies a retraction force F (FIG. 7) along a plane P formed by the moveable cover 42. When each pin 60 is released from their respective nesting devices 70, the retraction means moves the cover 42 into the retracted position A within housing 48. An exemplary embodiment of the retraction means 46 is a spiral spring connected to the first end (not shown) of the moveable cover 42. In such an embodiment, the retraction means 46 can wind the moveable cover 42 up inside the housing 48 when the pins 60 are released from the nesting devices 70. Any other suitable mechanism may also be used to retract the cover.

The two pins 60 are configured to engage and cooperate with nesting devices 70 positioned on opposing sides 20 of rear compartment 10 (nesting devices show in FIG. 7 and detailed below). Specifically, the pins 60 extend from the sides of the moveable cover 42 where the moveable cover 42 and endboard 54 are connected. Further, each pin 60 has an axis X, the axis X being perpendicular to the extension direction of the moveable cover 42. The axis X is also the endboard 54 rotation axis. A user can rotate or deflect the endboard 54 about the axis X, which causes the pins 60 to dislodge from the nesting device 70. When the pins 60 engage the nesting devices 70, the moveable cover 20 is in the extended position B shown in FIG. 5. When the pins 60 are released from the nesting device 70 via rotation of endboard 54, the retraction means 46 pulls the moveable cover 42 into the retracted position A shown in FIG. 4.

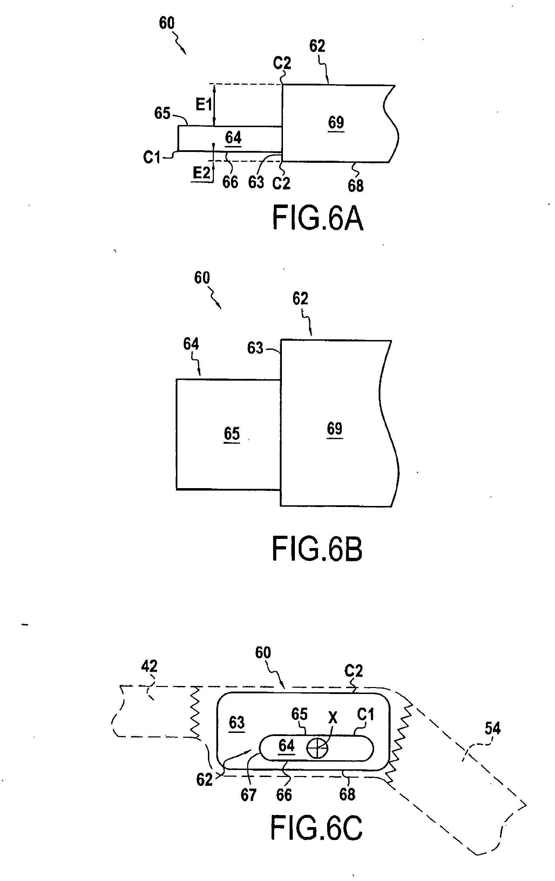

FIGS. 6A to 6C shows further details of exemplary pins 60 according to an embodiment of the disclosure. For purposes of clarity, only one pin and nesting device is described below. The pin and nesting devices on each side of cover are similar.

The pin 60 is on opposing ends of a rod 69, the rod 69 being enclosed within, or secured to, the moveable cover 42 and endboard 54 so that the pins 60 extend past either side of the cover 42. In other embodiments, however, the pins 60 may be separate structures that are directly secured to the moveable cover 42.

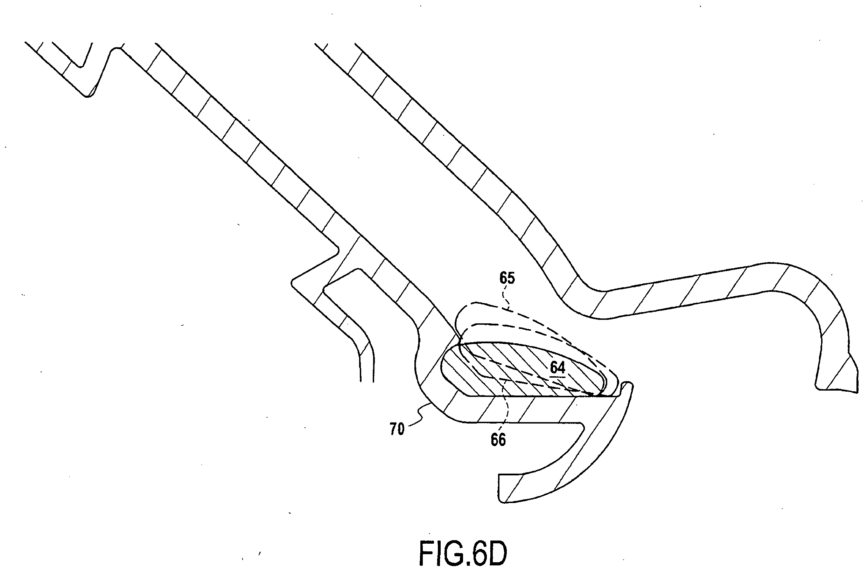

Further, as shown in FIG. 6C, the pin 60 and rod 69 are configured to be secured to the cover 42 and endboard 54 so that when the endboard 54 is deflected, the pin 60 and rod 69 rotate to effect dislodgement of the pin from the nesting device 70 (see FIG. 6D).

Further, as shown in FIGS. 6A through 6C, the pin 60 has a base portion 62 (which is the end of rod 69) and a projection 64. The projection 64 extends from the surface 63 of the base portion 62.

The pin 60 is illustrated with the projection 64 having a first perimeter C1 and the base portion 62 with a second perimeter C2. The first perimeter C1 (the projection 64 perimeter) is contained within the second perimeter C2 of the base portion 62. Importantly, however, C1 may also be outside of the second perimeter C2, as desired.

Further, the projection 64 has an upper surface 65 and a lower surface 66, both surfaces offset distances E1 and E2 from the perimeter C2 of the base portion 62. The offset distances E1 and E2 are selected so that the projection 64 is offset from the center (not numbered) of base portion 62. Specifically, in the embodiment shown in FIGS. 6A and 6C, E1 is greater than E2 so that the projection 64 is offset toward a lower edge 68 of the base portion 62. The lower surface 66 of projection 64, however, can rest on the nesting device 70 as detailed below. The specific distances E1, E2 are not critical; E1 and E2 can range between approximately 0.1 mm and 50 mm as desired. Further, perimeters C1, C2, and thus the shapes of the projection 64 and base portion 62, may be modified as well.

Turning to FIG. 6C, each projection 64 has a pin axis X which is at the geometric center of the projection 64. Further, the projection 64 is offset from a center of the base portion 62 to position the pin axis X the distance D from the cover plane P (FIG. 7). In other embodiments, however, the pin axis X may be in other locations of the projection 64.

While a particular pin 60 design is shown and described herein, the pin 60 can have variations on the illustrated design. Specifically, in embodiments where the projection 64 has a size, shape, and position that is different from that which is shown in FIGS. 6A through 6C, the pin 60 and cover 42 are configured so that the pin axis X remains the endboard 54 rotation axis, as described above.

FIG. 7 is a schematic illustrating how the tonneau cover device 40 engages a nesting device 70. Specifically, FIG. 7 is a detailed side schematic view of the tonneau cover device 40 and nesting device 70 shown in FIG. 4, with portions of the nesting device 70 removed for illustrative purposes. The nesting device 70 has a hook portion 72 and a channel 76 positioned forward (toward the front of the vehicle) and above the hook portion 72. The hook portion 72 includes a ridge 74 extending over a hook platform 73 to create a space for the pin 60 to rest within. Specifically, the lower surface 66 of the projection 64 can rest on hook platform 73.

Continuing with FIG. 7, the channel 76 is formed between upper surface 75 of the ridge 74 and the rail 78. The channel 76 engages and guides movement of pin 60 during operation of the tonneau cover device 40. When the pin 60 is released from the hook portion 72 (this mechanism being caused by the endboard 54 deflection), the moveable cover 42 retracts and the pin 60 slides within the channel 76. While the nesting device 70 shown is a horizontal-type nesting device, a vertical-type nesting device is possible, and such a vertical nesting device can be similar or even identical to the horizontal-type, albeit with an altered orientation. In vertical-type nesting device, (not shown), the rail 78 and channel 76 can be positioned at an upwardly extending angle with respect hook platform 73 that the cover 42 moves upwardly and retracts when the pins 60 are dislodged from the hook portion 72 of the nesting device.

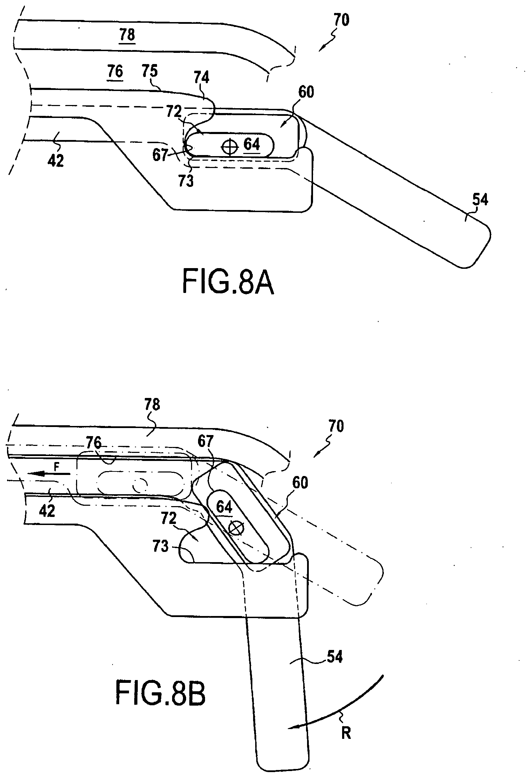

FIGS. 8A and 8B illustrate how the pin 60 dislodges from the nesting device 70 to allow the cover 42 to retract. Specifically, rotating the endboard 54 in the direction R as shown in FIG. 8A applies a torque (detailed below) to the pin 60, rotating the pin 60 within hook portion 72. The pin side 67 moves upwardly from the hook platform 72 to engage hook ridge 74. As the torque exceeds a certain magnitude, the pin side 67 bears against and is then urged past the ridge 74, dislodging the pin 60 from the hook portion 72, as shown in FIG. 8B. When the pin 60 exits the hook portion 72, the retracting means 46(not shown in FIG. 7), by applying the force F to the cover 42, pulls the cover 42 in a forward direction (back within the housing 48) while the pin 60 is guided within the channel 76 (shown in dashed lines in FIG. 8B).

Returning to FIG. 7, the pin 60 is configured to engage the nesting device 70 so that the pin axis X (which is rotation of axis of the endboard 54) is offset a distance D from the cover plane P. The offset distance D is preferably greater than zero. More preferably, the offset distance D is at least 2 mm. In preferred embodiments, the offset distance D is between approximately 5 mm and 20 mm, although any suitable offset may be implemented. The offset distance D may vary depending on the type of vehicle, the size of the endboard, etc.

Pin axis X may present a horizontal offset such that pin axis X is offset by a particular distance from an endboard edge of pin 60. Such a horizontal offset may be at least 2 mm, and may be implemented alone or in conjunction with any offset from the cover plane P.

The offset distance D is selected to minimize unintended pin dislodgement from the nesting device. For example, when the offset distance D is greater than zero, the torque required to dislodge the pin 60 from then nesting device 70 is increased. More specifically, the counter torque (T) resulting from cover 42 can be described by the following equation (1): T = F • D, where F is the retraction force applied to the cover 42 and the D is the offset distance as described herein. The torque T is partly countered by the weight torque T_{W} of the endboard 54, which is given by the following equation (2): T_{W} = M • Y, wherein, M is the mass in grams of the endboard 54, and Y is defined by the distance the pin axis X and the center of gravity 55. Dislodge torque T_{D} (i.e., the torque to dislodge pin 60) can then be described by the following equation (3): T_{D}=T_{D0} + T - T_{W}, where T_{D0} equals the dislodge torque with an offset of D=0. Thus, as the offset distance D increases, the torque required to dislodge the pin 60 from the nesting device 70 also increases. Further, when the offset distance D is equal to 0, the torque required to dislodge the pin 60 is lower compared to the situation when the offset distance D is greater than zero.

Typical tonneau cover devices have an endboard rotation axis (pin axis) that is positioned one or substantially near the plane P (i.e., D = 0) of the moveable cover 42. The force and/or torque required to dislodge the pin 60 from the nesting device is somewhat low for such typical devices. Any sufficient significant force applied to the endboard 54, such as that which occurs when traveling over a bumpy road surface resulting in endboard swinging, can cause the pin 60 to dislodge and the cover 42 to retract.

In contrast, when the tonneau cover device 40 is configured as described herein to have an offset distance D between the plane P and the pin axis X, and the vehicle is travelling over a bumpy road surface, pin 60 dislodgement is minimized because the required torque to dislodge the pin 60 is increased. Such a tonneau cover device 40 has improved stability and performance.

In other embodiments, that is for other nesting device configurations, the offset distance D can be above the plane P. That is, a tonneau cover device systems (nesting device 70 and tonneau cover device 40) can be configured so that the endboard 54 is pulled upwardly by the user to operate. In such a system, the pin 60 is positioned above the cover 42 and plane P. Accordingly, the pin axis X is offset a distance D above the plane P. In this system, the offset distance D is preferably greater than zero. More preferably, the offset distance D is at least 2 mm. In a preferred embodiments, the offset distance D is between approximately 5 mm and 20 mm, although any suitable offset may be implemented.

While the embodiments describe illustrate a specific pin and cover design for creating an offset distance D, any other configuration that moves the endboard rotation axis X above or below the moveable cover 42 would fall within the scope of the disclosure as described herein.

Further, the scope of the disclosure as described herein includes a tonneau cover device alone, any vehicle comprising a tonneau cover device and a nesting device (s), and a system that includes a tonneau cover device and a nesting device (s). In any aspect of the any single embodiment disclosed herein, any feature and/or elements disclosed in one embodiment can be used in any combination with any particular or specific feature of another embodiment. For example, any single specific feature or combination of features of the pin 60 can be used to with any specific features of cover device, nesting device, and/or moveable cover.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. A vehicle (1) comprising:
a cabin (8) with a rear compartment (10) having an interior side;
a tonneau cover device (40) for use in the rear compartment (10), the tonneau cover device (40) comprising
a retraction device (50);
a cover (42) engaged with the retraction device (50) and capable of moving between a retracted position (A) and an extended position (B), the cover (42) having a distal end, the cover (42) forming a plane (P) along which a retraction force (F) is applied to the cover (42) by the retraction device (50);
**characterized by** comprising:
a pin (60) extending from the cover (42), the pin (60) having an axis (X) that is offset a first distance (D) from the plane (P); and
an endboard (54) arranged at the distal end of the cover (42), the endboard (54) capable of pivoting about the axis (X);
a nesting device (70) on the interior side of the rear compartment (10) and configured to receive the pin (60) when the cover (42) is in the extended position (B); and
wherein the first offset distance (D) increases the force required to release the pin (60) from the nesting device (70) to minimize release of the pin (60) when the vehicle (1) is moving,
the endboard (54) is configured to pivot about the pin axis (X) to release each pin (60) from their respective nesting devices (70) to move the cover (42) into the retracted position (A),
the pin (60) is on opposing ends of a rod (69), the rod (69) being enclosed within, or secured to, the moveable cover (42) and endboard (54) so that the pin (60) extends past either side of the cover (42),
the pin (60) has a base portion (62) which is the end of the rod (69) and a projection (64), the projection (64) extending from a surface (63) of the base portion (62),
the projection (64) has a first perimeter (C1) and the base portion (62) has a second perimeter (C2), wherein the first perimeter (C1) is contained within the second perimeter (C2),
the projection (64) has an upper surface (65) and a lower surface (66), the upper surface (65) being offset a second distance (E1) and the lower surface (66) being offset a third distance (E2) from the second perimeter (C2) of the base portion (62), and
the second and third offset distances (E1, E2) are selected so that the projection (64) is offset from the center of the base portion (62).

2. A vehicle (1) according to claim 1, wherein the pin (60) has a base portion (62) and a projection (64), the projection (64) extending from the base portion (62) to engage the nesting device (70).

3. A vehicle (1) according to any of one of claims 1 and 2, wherein the projection (64) is offset from a center of the base portion (62) to position the pin axis (X) the first offset distance (D) from the cover plane (P).

4. A vehicle (1) according any one of claims 1 to 3, wherein the pin axis (X) has a first offset distance (D) that is at least 2 mm from the cover plane (P).

5. A vehicle (1) according to claim 4, wherein the pin axis (X) has a first offset distance (D) that is at least 2 mm below the cover plane (P).

6. A vehicle (1) according to claim 4, wherein the pin axis (X) has a first offset distance D that is at least 2 mm above the cover plane (P).

7. A vehicle (1) according to any of claims 1 to 6, wherein the retraction device (50) comprises a housing (48), the retraction device (50) being configured to apply the retraction force (F) for moving the cover (42) at least partially into the housing (48) when the each pin (60) is released from their respective nesting devices (70).

8. A tonneau cover device (40) for a rear compartment (10) for a vehicle (1), the vehicle (1) having a cabin (8) with a rear compartment (10) having an interior side, and a nesting device (70) in the interior side of the rear compartment (10), wherein the tonneau cover device (40) comprises:
a retraction device (50);
a cover (42) engaged with the retraction device (50) and capable of moving between a retracted position (A) and an extended position (B), the cover (42) having a distal end, the cover (42) forming a plane (P) along which a retraction force (F) is applied to the cover (42) by the retraction device (50);
**characterized by** comprising:
a pin (60) extending from the cover (42), the pin (60) having an axis (X) that is offset a first distance (D) from the plane (P), the pin (60) configured to engage the nesting device (70) when the cover (42) is in the extended position (B); and
an endboard (54) arranged at the distal end of the cover (42), the endboard (54) capable of pivoting about the axis (X); and
wherein the first offset distance (D) increases the force required to release the pin (60) from the nesting device (70) to minimize release of the pin (60) when the vehicle (1) is moving when the tonneau cover device (40) is placed in the rear compartment (10) of the vehicle (1),
the endboard (54) is configured to pivot about the pin axis (X) to release each pin (60) from their respective nesting devices (70) to move the cover (42) into the retracted position (A),
the pin (60) is on opposing ends of a rod (69), the rod (69) being enclosed within, or secured to, the moveable cover (42) and endboard (54) so that the pin (60) extends past either side of the cover (42),
the pin (60) has a base portion (62) which is the end of the rod (69) and a projection (64), the projection (64) extending from a surface (63) of the base portion (62),
the projection (64) has a first perimeter (C1) and the base portion (62) has a second perimeter (C2), wherein the first perimeter (C1) is contained within the second perimeter (C2),
the projection (64) has an upper surface (65) and a lower surface (66), the upper surface (65) being offset a second distance (E1) and the lower surface (66) being offset a third distance (E2) from the second perimeter (C2) of the base portion (62), and
the second and third offset distances (E1, E2) are selected so that the projection (64) is offset from the center of the base portion (62).

9. A tonneau cover device (40) according to claim 8, wherein the pin (60) has a base portion (62) and a projection (64), the projection (64) extending from the base portion (62) to engage the nesting device (70).

10. A tonneau cover device (40) according to claim 9, wherein the projection (64) is offset from a center of the base portion (62) to position the pin axis (X) the first offset distance (D) from the cover plane (P).

11. A tonneau cover device (40) according to any one of claims 8 to 10, wherein the pin axis (X) has a first offset distance (D) that is at least 2 mm from the cover plane (P).

12. A tonneau cover device (40) according to claim 11, wherein the pin axis (X) has a first offset distance (D) that is at least 2 mm below the cover plane (P).

13. A tonneau cover device (40) according to claim 11, wherein the pin axis (X) has a first offset distance D that is at least 2 mm above the cover plane (P).

14. A tonneau cover device (40) according to any one of claims 8 to 13, wherein the retraction device (50) comprises a housing (48), the retraction device (70) configured to apply the retraction force (F) for moving the cover (42) at least partially into the housing (48) when each pin (60) is released from its respective nesting device (70).

## Patentansprüche

1. Fahrzeug (1), umfassend:
eine Kabine (8) mit einem hinteren Abteil (10), das eine Innenseite aufweist,
eine Laderaumabdeckvorrichtung (40) zur Verwendung in dem hinteren Abteil (10), wobei die Laderaumabdeckvorrichtung (40) umfasst:
eine Einziehvorrichtung (50),
eine Abdeckung (42), die mit der Einziehvorrichtung (50) in Eingriff steht und in der Lage ist, sich zwischen einer eingezogenen Position (A) und einer herausgezogenen Position (B) zu bewegen, wobei die Abdeckung (42) ein distales Ende aufweist, wobei die Abdeckung (42) eine Ebene (P) bildet, entlang der durch die Einziehvorrichtung (50) eine Einzugskraft (F) an die Abdeckung (42) angelegt wird,
**dadurch gekennzeichnet, dass** es umfasst:
einen Stift (60), der sich von der Abdeckung (42) erstreckt, wobei der Stift (60) eine Achse (X) aufweist, die um eine erste Distanz (D) von der Ebene (P) versetzt ist, und
eine Endplatte (54), die am distalen Ende der Abdeckung (42) angeordnet ist, wobei die Endplatte (54) in der Lage ist, um die Achse (X) zu schwenken,
eine Einhakvorrichtung (70) auf der Innenseite des hinteren Abteils (10), die dafür konfiguriert ist, den Stift (60) aufzunehmen, wenn sich die Abdeckung (42) in der herausgezogenen Position (B) befindet, und
wobei die erste Versatzdistanz (D) die Kraft erhöht, die erforderlich ist, um den Stift (60) aus der Einhakvorrichtung (70) zu lösen, um das Lösen des Stiftes (60) zu minimieren, wenn das Fahrzeug (1) fährt,
die Endplatte (54) dafür konfiguriert ist, um die Stiftachse (X) zu schwenken, um jeden Stift (60) aus seiner jeweiligen Einhakvorrichtung (70) zu lösen, um die Abdeckung (42) in die eingezogene Position (A) zu bewegen,
der Stift (60) sich an gegenüberliegenden Enden einer Stange (69) befindet, wobei die Stange (69) innerhalb der beweglichen Abdeckung (42) und der Endplatte (54) umschlossen oder an der beweglichen Abdeckung (42) und der Endplatte (54) befestigt ist, dergestalt, dass sich der Stift (60) über beide Seiten der Abdeckung (42) hinaus erstreckt,
der Stift (60) einen Basisabschnitt (62) aufweist, der das Ende der Stange (69) ist, und einen Vorsprung (64) aufweist, wobei sich der Vorsprung (64) von einer Fläche (63) des Basisabschnitts (62) erstreckt,
der Vorsprung (64) einen ersten Umfang (C1) hat und der Basisabschnitt (62) einen zweiten Umfang (C2) hat, wobei der erste Umfang (C1) innerhalb des zweiten Umfangs (C2) enthalten ist,
der Vorsprung (64) eine Oberseite (65) und eine Unterseite (66) aufweist, wobei die Oberseite (65) um eine zweite Distanz (E1) und die Unterseite (66) um eine dritte Distanz (E2) von dem zweiten Umfang (C2) des Basisabschnitts (62) versetzt ist, und
die zweite und die dritte Versatzdistanz (E1, E2) so gewählt sind, dass der Vorsprung (64) von der Mitte des Basisabschnitts (62) versetzt ist.

2. Fahrzeug (1) nach Anspruch 1, wobei der Stift (60) einen Basisabschnitt (62) und einen Vorsprung (64) hat, wobei sich der Vorsprung (64) von dem Basisabschnitt (62) erstreckt, um die Einhakvorrichtung (70) in Eingriff zu nehmen.

3. Fahrzeug (1) nach einem der Ansprüche 1 und 2, wobei der Vorsprung (64) von einer Mitte des Basisabschnitts (62) versetzt ist, um die Stiftachse (X) um die erste Versatzdistanz (D) von der Abdeckungsebene (P) zu positionieren.

4. Fahrzeug (1) nach einem der Ansprüche 1 bis 3, wobei die Stiftachse (X) eine erste Versatzdistanz (D) hat, die mindestens 2 mm von der Abdeckungsebene (P) misst.

5. Fahrzeug (1) nach Anspruch 4, wobei die Stiftachse (X) eine erste Versatzdistanz (D) hat, die mindestens 2 mm unter der Abdeckungsebene (P) liegt.

6. Fahrzeug (1) nach Anspruch 4, wobei die Stiftachse (X) eine erste Versatzdistanz D hat, die mindestens 2 mm über der Abdeckungsebene (P) liegt.

7. Fahrzeug (1) nach den Ansprüchen 1 bis 6, wobei die Einziehvorrichtung (50) ein Gehäuse (48) umfasst, wobei die Einziehvorrichtung (50) dafür konfiguriert ist, die Einzugskraft (F) anzulegen, um die Abdeckung (42) mindestens teilweise in das Gehäuse (48) zu bewegen, wenn jeder Stift (60) aus einer jeweiligen Einhakvorrichtung (70) gelöst ist.

8. Laderaumabdeckvorrichtung (40) für ein hinteres Abteil (10) für ein Fahrzeug (1), wobei das Fahrzeug (1) eine Kabine (8) mit einem hinteren Abteil (10) aufweist, die eine Innenseite aufweist, und eine Einhakvorrichtung (70) in der Innenseite des hinteren Abteils (10) aufweist, wobei die Laderaumabdeckvorrichtung (40) umfasst:
eine Einziehvorrichtung (50),
eine Abdeckung (42), die mit der Einziehvorrichtung (50) in Eingriff steht und in der Lage ist, sich zwischen einer eingezogenen Position (A) und einer herausgezogenen Position (B) zu bewegen, wobei die Abdeckung (42) ein distales Ende aufweist, wobei die Abdeckung (42) eine Ebene (P) bildet, entlang der durch die Einziehvorrichtung (50) eine Einzugskraft (F) an die Abdeckung (42) angelegt wird,
**dadurch gekennzeichnet, dass** sie umfasst:
einen Stift (60), der sich von der Abdeckung (42) erstreckt, wobei der Stift (60) eine Achse (X) aufweist, die um eine erste Distanz (D) von der Ebene (P) versetzt ist, wobei der Stift (60) dafür konfiguriert ist, die Einhakvorrichtung (70) in Eingriff zu nehmen, wenn die Abdeckung (42) in der herausgezogenen Position (B) ist, und
eine Endplatte (54), die am distalen Ende der Abdeckung (42) angeordnet ist, wobei die Endplatte (54) in der Lage ist, um die Achse (X) zu schwenken, und
wobei die erste Versatzdistanz (D) die Kraft erhöht, die erforderlich ist, um den Stift (60) aus der Einhakvorrichtung (70) zu lösen, um das Lösen des Stiftes (60) zu minimieren, wenn das Fahrzeug (1) fährt, wenn die Laderaumabdeckvorrichtung (40) in dem hinteren Abteil (10) des Fahrzeugs (1) angeordnet ist,
die Endplatte (54) dafür konfiguriert ist, um die Stiftachse (X) zu schwenken, um jeden Stift (60) aus seiner jeweiligen Einhakvorrichtung (70) zu lösen, um die Abdeckung (42) in die eingezogene Position (A) zu bewegen,
der Stift (60) sich an gegenüberliegenden Enden einer Stange (69) befindet, wobei die Stange (69) innerhalb der beweglichen Abdeckung (42) und der Endplatte (54) umschlossen oder an der beweglichen Abdeckung (42) und der Endplatte (54) befestigt ist, dergestalt, dass sich der Stift (60) über beide Seiten der Abdeckung (42) hinaus erstreckt,
der Stift (60) einen Basisabschnitt (62) aufweist, der das Ende der Stange (69) ist, und einen Vorsprung (64) aufweist, wobei sich der Vorsprung (64) von einer Fläche (63) des Basisabschnitts (62) erstreckt,
der Vorsprung (64) einen ersten Umfang (C1) hat und der Basisabschnitt (62) einen zweiten Umfang (C2) hat, wobei der erste Umfang (C1) innerhalb des zweiten Umfangs (C2) enthalten ist,
der Vorsprung (64) eine Oberseite (65) und eine Unterseite (66) aufweist, wobei die Oberseite (65) um eine zweite Distanz (E1) und die Unterseite (66) um eine dritte Distanz (E2) von dem zweiten Umfang (C2) des Basisabschnitts (62) versetzt ist, und
die zweite und die dritte Versatzdistanz (E1, E2) so gewählt sind, dass der Vorsprung (64) von der Mitte des Basisabschnitts (62) versetzt ist.

9. Laderaumabdeckvorrichtung (40) nach Anspruch 8, wobei der Stift (60) einen Basisabschnitt (62) und einen Vorsprung (64) hat, wobei sich der Vorsprung (64) von dem Basisabschnitt (62) erstreckt, um die Einhakvorrichtung (70) in Eingriff zu nehmen.

10. Laderaumabdeckvorrichtung (40) nach Anspruch 9, wobei der Vorsprung (64) von einer Mitte des Basisabschnitts (62) versetzt ist, um die Stiftachse (X) um die erste Versatzdistanz (D) von der Abdeckungsebene (P) zu positionieren.

11. Laderaumabdeckvorrichtung (40) nach einem der Ansprüche 8 bis 10, wobei die Stiftachse (X) eine erste Versatzdistanz (D) hat, die mindestens 2 mm von der Abdeckungsebene (P) misst.

12. Laderaumabdeckvorrichtung (40) nach Anspruch 11, wobei die Stiftachse (X) eine erste Versatzdistanz (D) hat, die mindestens 2 mm unter der Abdeckungsebene (P) liegt.

13. Laderaumabdeckvorrichtung (40) nach Anspruch 11, wobei die Stiftachse (X) eine Versatzdistanz (D) hat, die mindestens 2 mm unter der Abdeckungsebene (P) liegt.

14. Laderaumabdeckvorrichtung (40) nach einem der Ansprüche 8 bis 13, wobei die Einziehvorrichtung (50) ein Gehäuse (48) umfasst, wobei die Einziehvorrichtung (50) dafür konfiguriert ist, die Einzugskraft (F) anzulegen, um die Abdeckung (42) mindestens teilweise in das Gehäuse (48) zu bewegen, wenn jeder Stift (60) aus einer jeweiligen Einhakvorrichtung (70) gelöst ist.

## Revendications

1. Véhicule (1) comprenant :
un habitacle (8) avec un compartiment arrière (10) ayant un côté intérieur ;
un dispositif de couvre-bagages (40) pour utilisation dans le compartiment arrière (10), le dispositif de couvre-bagages (40) comprenant
un dispositif de rétraction (50) ;
un couvre-bagages (42) engagé avec le dispositif de rétraction (50) et capable de se déplacer entre une position rentrée (A) et une position sortie (B), le couvre-bagages (42) ayant une extrémité distale, le couvre-bagages (42) formant un plan (P) le long duquel une force de rétraction (F) est appliquée sur le couvre-bagages (42) par le dispositif de rétraction (50) ;
**caractérisé en ce qu'**il comprend :
un doigt (60) s'étendant depuis le couvre-bagages (42), le doigt (60) ayant un axe (X) qui est décalé d'une première distance (D) par rapport au plan (P) ; et
un rabat (54) disposé à l'extrémité distale du couvre-bagages (42), le rabat (54) étant capable de pivoter autour de l'axe (X) ;
un dispositif d'emboîtement (70) sur le côté intérieur du compartiment arrière (10) et configuré pour recevoir le doigt (60) quand le couvre-bagages (42) est dans la position sortie (B) ; et
dans lequel la première distance de décalage (D) augmente la force exigée pour libérer le doigt (60) du dispositif d'emboîtement (70) pour minimiser une libération du doigt (60) quand le véhicule (1) se déplace,
le rabat (54) est configuré pour pivoter autour de l'axe de doigt (X) pour libérer chaque doigt (60) de son dispositif d'emboîtement respectif (70) pour déplacer le couvre-bagages (42) dans la position rentrée (A),
le doigt (60) est sur des extrémités opposées d'une tige (69), la tige (69) étant enfermée dans, ou fixée sur, le couvre-bagages mobile (42) et le rabat (54) de telle sorte que le doigt (60) s'étend au-delà de chaque côté du couvre-bagages (42),
le doigt (60) a une partie de base (62) qui est l'extrémité de la tige (69) et une saillie (64), la saillie (64) s'étendant depuis une surface (63) de la partie de base (62),
la saillie (64) a un premier périmètre (C1) et la partie de base (62) a un deuxième périmètre (C2), le premier périmètre (C1) étant contenu dans le deuxième périmètre (C2),
la saillie (64) a une surface supérieure (65) et une surface inférieure (66), la surface supérieure (65) étant décalée d'une deuxième distance (E1) et la surface inférieure (66) étant décalée d'une troisième distance (E2) du deuxième périmètre (C2) de la partie de base (62), et
les deuxième et troisième distances de décalage (E1, E2) sont choisies de telle sorte que la saillie (64) est décalée par rapport au centre de la partie de base (62) .

2. Véhicule (1) selon la revendication 1, dans lequel le doigt (60) a une partie de base (62) et une saillie (64), la saillie (64) s'étendant depuis la partie de base (62) pour engager le dispositif d'emboîtement (70).

3. Véhicule (1) selon l'une quelconque des revendications 1 et 2, dans lequel la saillie (64) est décalée par rapport à un centre de la partie de base (62) pour positionner l'axe de doigt (X) à la première distance de décalage (D) par rapport au plan de couvre-bagages (P).

4. Véhicule (1) selon l'une quelconque des revendications 1 à 3, dans lequel l'axe de doigt (X) a une première distance de décalage (D) qui est à au moins 2 mm du plan de couvre-bagages (P).

5. Véhicule (1) selon la revendication 4, dans lequel l'axe de doigt (X) a une première distance de décalage (D) qui est au moins 2 mm en dessous du plan de couvre-bagages (P).

6. Véhicule (1) selon la revendication 4, dans lequel l'axe de doigt (X) a une première distance de décalage D qui est au moins 2 mm au-dessus du plan de couvre-bagages (P).

7. Véhicule (1) selon l'une quelconque des revendications 1 à 6, dans lequel le dispositif de rétraction (50) comprend un logement (48), le dispositif de rétraction (50) étant configuré pour appliquer la force de rétraction (F) pour déplacer le couvre-bagages (42) au moins partiellement dans le logement (48) quand chaque doigt (60) est libéré de son dispositif d'emboîtement respectif (70).

8. Dispositif de couvre-bagages (40) pour un compartiment arrière (10) pour un véhicule (1), le véhicule (1) ayant un habitacle (8) avec un compartiment arrière (10) ayant un côté intérieur, et un dispositif d'emboîtement (70) dans le côté intérieur du compartiment arrière (10), le dispositif de couvre-bagages (40) comprenant :
un dispositif de rétraction (50) ;
un couvre-bagages (42) engagé avec le dispositif de rétraction (50) et capable de se déplacer entre une position rentrée (A) et une position sortie (B), le couvre-bagages (42) ayant une extrémité distale, le couvre-bagages (42) formant un plan (P) le long duquel une force de rétraction (F) est appliquée sur le couvre-bagages (42) par le dispositif de rétraction (50) ;
**caractérisé en ce qu'**il comprend :
un doigt (60) s'étendant depuis le couvre-bagages (42), le doigt (60) ayant un axe (X) qui est décalé d'une première distance (D) par rapport au plan (P), le doigt (60) étant configuré pour engager le dispositif d'emboîtement (70) quand le couvre-bagages (42) est dans la position sortie (B) ; et
un rabat (54) disposé à l'extrémité distale du couvre-bagages (42), le rabat (54) étant capable de pivoter autour de l'axe (X) ; et
dans lequel la première distance de décalage (D) augmente la force exigée pour libérer le doigt (60) du dispositif d'emboîtement (70) pour minimiser une libération du doigt (60) quand le véhicule (1) se déplace quand le dispositif de couvre-bagages (40) est placé dans le compartiment arrière (10) du véhicule (1),
le rabat (54) est configuré pour pivoter autour de l'axe de doigt (X) pour libérer chaque doigt (60) de son dispositif d'emboîtement respectif (70) pour déplacer le couvre-bagages (42) dans la position rentrée (A),
le doigt (60) est sur des extrémités opposées d'une tige (69), la tige (69) étant enfermée dans, ou fixée sur, le couvre-bagages mobile (42) et le rabat (54) de telle sorte que le doigt (60) s'étend au-delà de chaque côté du couvre-bagages (42),
le doigt (60) a une partie de base (62) qui est l'extrémité de la tige (69) et une saillie (64), la saillie (64) s'étendant depuis une surface (63) de la partie de base (62),
la saillie (64) a un premier périmètre (C1) et la partie de base (62) a un deuxième périmètre (C2), le premier périmètre (C1) étant contenu dans le deuxième périmètre (C2),
la saillie (64) a une surface supérieure (65) et une surface inférieure (66), la surface supérieure (65) étant décalée d'une deuxième distance (E1) et la surface inférieure (66) étant décalée d'une troisième distance (E2) du deuxième périmètre (C2) de la partie de base (62), et
les deuxième et troisième distances de décalage (E1, E2) sont choisies de telle sorte que la saillie (64) est décalée par rapport au centre de la partie de base (62) .

9. Dispositif de couvre-bagages (40) selon la revendication 8, dans lequel le doigt (60) a une partie de base (62) et une saillie (64), la saillie (64) s'étendant depuis la partie de base (62) pour engager le dispositif d'emboîtement (70).

10. Dispositif de couvre-bagages (40) selon la revendication 9, dans lequel la saillie (64) est décalée par rapport à un centre de la partie de base (62) pour positionner l'axe de doigt (X) à la première distance de décalage (D) par rapport au plan de couvre-bagages (P).

11. Dispositif de couvre-bagages (40) selon l'une quelconque des revendications 8 à 10, dans lequel l'axe de doigt (X) a une première distance de décalage (D) qui est au moins à 2 mm du plan de couvre-bagages (P).

12. Dispositif de couvre-bagages (40) selon la revendication 11, dans lequel l'axe de doigt (X) a une première distance de décalage (D) qui est au moins 2 mm en dessous du plan de couvre-bagages (P).

13. Dispositif de couvre-bagages (40) selon la revendication 11, dans lequel l'axe de doigt (X) a une première distance de décalage D qui est au moins 2 mm au-dessus du plan de couvre-bagages (P).

14. Dispositif de couvre-bagages (40) selon l'une quelconque des revendications 8 à 13, dans lequel le dispositif de rétraction (50) comprend un logement (48), le dispositif de rétraction (70) étant configuré pour appliquer la force de rétraction (F) pour déplacer le couvre-bagages (42) au moins partiellement dans le logement (48) quand chaque doigt (60) est libéré de son dispositif d'emboîtement respectif (70).
